# EUROPEAN PATENT SPECIFICATION

(11) **EP 3 195 401 B1**
(45) Date of publication and mention of the grant of the patent: **27.02.2019**
(21) Application number: 15767044.9
(22) Date of filing: 11.09.2015
(51) Int. Cl.: H01M 10/052, H01M 10/056

(54) **NONAQUEOUS ELECTROLYTE COMPOSITIONS**
NICHT-WÄSSRIGE ELEKTROLYTZUSAMMENSETZUNGEN
COMPOSITIONS D'ÉLECTROLYTE NONAQUEUSES

(30) Priority: 19.09.2014 US 201414490785
(43) Date of publication of application: 26.07.2017
(73) Proprietor: SOLVAY SA, 1120 Bruxelles (BE)
(72) Inventor: BURKHARDT, Stephen E., Wilmington, Delaware 19802 (US); KOURTAKIS, Kostantinos, Media, Pennsylvania 19063 (US); ROELOFS, Mark Gerrit, Earleville, Maryland 21919 (US); DUBOIS, Charles J., Orange, Texas 77632 (US)
(74) Representative: Menville, Laure
(86) International application number: PCT/US2015/049642
(87) International publication number: WO 2016/044088

(56) References cited:
- EP-A1- 1 890 357
- WO-A1-2011/051275
- WO-A1-2012/170240
- WO-A1-2013/033579
- US-A1- 2012 328 938

## Description

### FIELD OF THE DISCLOSURE

The present disclosure is directed toward electrolyte compositions containing a fluorinated compound, a non-fluorinated carbonate, a lithium/boron compound and a lithium salt. The electrolyte compositions are useful in electrochemical cells, such as lithium ion batteries.

### BACKGROUND

Carbonate compounds are currently used as electrolyte solvents for non-aqueous batteries containing electrodes made from alkali metals, alkaline earth metals, or compounds comprising these metals, for example lithium ion batteries. Current lithium ion battery electrolytes typically contain one or more linear carbonates, such as ethyl methyl carbonate, dimethyl carbonate, or diethyl carbonate; and a cyclic carbonate, such as ethylene carbonate. However, at cathode potentials above 4.25 V versus a Li/Li+ reference electrode, these electrolytes can decompose, which can result in a loss of battery performance. Additionally, there are safety concerns with the use of these electrolytes because of their low boiling point and high flammability.

Various approaches have been investigated to overcome the limitations of commonly used non-aqueous electrolytes. For example, additives, such as cyclic carboxylic acid anhydrides, have been used in combination with certain electrolyte solvents (see, for example, Jeon et al. U.S. Patent Application Publication No. 2010/0273064 A1). Additionally, various fluorinated carboxylic acid ester electrolyte solvents have been investigated for use in lithium ion batteries (see, for example, Nakamura et al in JP 4/328,915-B2, JP 3/444,607-B2, and U.S. Patent No. 8,097,368). Although these electrolytes can be used in lithium ion batteries having high potential cathodes, such as the 4 V spinel LiMn₂O₄ cathode, cycling performance can be limited, particularly at high temperatures.

Despite the efforts in the art as described above, a need remains for electrolytes and compositions thereof, that will have improved cycling performance at high temperature when used in a lithium ion battery, particularly such a battery that operates with a high potential cathode (*i.e.* up to about 5 V).

### SUMMARY OF THE DISCLOSURE

The present invention relates to an electrolyte composition comprising:
a) at least one fluorinated compound represented by R¹COOR²;
b) a non-fluorinated carbonate;
c) from 0.1 to 10.0 percent by weight of a lithium/boron compound, which is lithium bis(oxalate)borate, based on the total weight of the electrolyte composition; and
d) a lithium salt, which is lithium hexafluorophosphate;
wherein R¹ and R² independently represent a linear or branched alkyl group; the sum of the carbon atoms in R¹ and R² is 2 to 7; at least two hydrogen atoms in R¹ and/or R² are replaced by fluorine atoms; and neither R¹ nor R² contains -CH₂F or -CHF- group.

The present disclosure also relates to an electrochemical cell comprising the disclosed electrolyte composition and an electronic device comprising the electrochemical cell.

### DETAILED DESCRIPTION

The features and advantages of the present disclosure will be more readily understood by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including each and every value between the minimum and maximum values.

As used herein:
The term "electrolyte composition" as used herein, refers to a chemical composition suitable for use as an electrolyte in an electrochemical cell.

The term "electrolyte salt" as used herein, refers to an ionic salt that is at least partially soluble in the electrolyte composition and that at least partially dissociates into ions in the electrolyte composition to form a conductive electrolyte composition.

The term "anode" refers to the electrode of an electrochemical cell, at which oxidation occurs. In a galvanic cell, such as a battery, the anode is the negatively charged electrode. In a secondary (i.e. rechargeable) battery, the anode is the electrode at which oxidation occurs during discharge and reduction occurs during charging.

The term "cathode" refers to the electrode of an electrochemical cell, at which reduction occurs. In a galvanic cell, such as a battery, the cathode is the positively charged electrode. In a secondary (i.e. rechargeable) battery, the cathode is the electrode at which reduction occurs during discharge and oxidation occurs during charging.

The term "lithium ion battery" refers to a type of rechargeable battery in which lithium ions move from the anode to the cathode during discharge and from the cathode to the anode during charge.

Equilibrium potential between lithium and lithium ion is the potential of a reference electrode using lithium metal in contact with the non-aqueous electrolyte containing lithium salt at a concentration sufficient to give about 1 mole/liter of lithium ion concentration, and subjected to sufficiently small currents so that the potential of the reference electrode is not significantly altered from its equilibrium value (Li/Li⁺). The potential of such a Li/Li⁺ reference electrode is assigned here the value of O.OV. Potential of an anode or cathode means the potential difference between the anode or cathode and that of a Li/Li⁺ reference electrode. Herein voltage means the voltage difference between the cathode and the anode of a cell, neither electrode of which may be operating at a potential of 0.0V.

The term "lithium/boron compound" refers to a compound having both lithium and boron in the empirical formula. The lithium and boron are not necessarily bonded directly to one another, but are present in the same compound.

It has been found that an electrolyte composition comprising or consisting essentially of the fluorinated compound, the non-fluorinated carbonate and the lithium/boron compound can provide a secondary battery having a high energy density, reduced off-gassing potential and a long charge/recharge life span.

The electrolyte composition comprises or consists essentially of:
a) at least one fluorinated compound represented by the R¹COOR²,
b) a non-fluorinated carbonate;
c) a lithium/boron compound, and
d) a lithium salt;
wherein R¹ and R² independently represent a linear or branched alkyl group; the sum of carbon atoms in R¹ and R² is 2 to 7; at least two hydrogens in R¹ and R² are replaced by fluorines; and neither R¹ nor R² contains a -CH₂F or -CHF group. In some embodiments, R¹ is -CH₃, C₂H₅ or C₃H₇ and R² contains fluorine. In other embodiments, the electrolyte composition further comprises up to 10 percent by weight of fluoroethylene carbonate.

The phrase "consisting essentially of" means that the electrolyte composition can contain as solvents, the components listed as a) and b) along with the optional fluoroethylene carbonate. The electrolyte composition is free from or essentially free from solvents that are fluorinated carbonates or other solvents that are not listed as one of the a) or b) components or fluoroethylene carbonate. "Essentially free from" means that a particular component is present at less than 5 percent by weight, or less than 3 percent by weight, or less than 1 percent by weight or less than 0.5 percent by weight based on the total weight of the electrolyte composition. Additionally, the consisting essentially of language means that the electrolyte composition is free from or essentially free from other electrolyte salts that are not lithium salts.

In the present disclosure, the components a) the at least one fluorinated compound, b) the non-fluorinated carbonate, c) the lithium/boron compound and e) the optional fluoroethylene carbonate are present in the electrolyte composition in various percentages by weight. Unless otherwise specified, the values for the percentages by weight are given as a percentage by weight based on the total weight of the electrolyte composition.

Suitable examples for the at least one fluorinated compound, R¹COOR², can include, CH₃COOCH₂CF₂H (2,2-difluoroethyl acetate, CAS No. 1550-44-3), CH₃COOCH₂CF₃ (2,2,2-trifluoroethyl acetate, CAS No. 406-95-1), CH₃CH₂COOCH₂CF₂H (2,2-difluoroethyl propionate, CAS No. 1133129-90-4), CH₃COOCH₂CH₂CF₂H (3,3-difluoropropyl acetate), CH₃CH₂COOCH₂CH₂CF₂H (3,3-difluoropropyl propionate), F₂CHCH₂COOCH₃, F₂CHCH₂COOCH₂CH₃, HCF₂CH₂CH₂COOCH₂CH₃ (ethyl 4,4-difluorobutanoate, CAS No. 1240725-43-2) or a combination thereof. In one embodiment, the fluorinated compound is 2,2-difluoroethyl acetate (CH₃COOCH₂CF₂H).

The at least one fluorinated compound is present in the electrolyte composition in the range of from 5 to 90 percent by weight, based on the total weight of the electrolyte composition. In other embodiments, the at least one fluorinated compound is present in the electrolyte composition in a percentage by weight range that is defined by a lower limit and an upper limit. The lower limit of the range is 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 and the upper limit of the range is 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89 or 90. All percentages by weight are based on the total weight of the electrolyte composition.

The electrolyte composition also comprises a non-fluorinated carbonate. Suitable examples of non-fluorinated carbonates can include, for example, ethylene carbonate, propylene carbonate, ethyl methyl carbonate, dimethyl carbonate, diethyl carbonate, butylene carbonate or a combination thereof. In some embodiments, the non-fluorinated carbonate is a cyclic carbonate, for example, ethylene carbonate or propylene carbonate.

The non-fluorinated carbonate is present in the electrolyte composition in the range of from 10 to 80 percent by weight, based on the total weight of the electrolyte composition. In other embodiments, the non-fluorinated is present in a percentage by weight range that is defined by a lower limit and an upper limit. The lower limit of the range is 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50 and the upper limit of the range is 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80. All percentages by weight are based on the total weight of the electrolyte composition.

The electrolyte composition also comprises a lithium/boron compound. It has been found that the addition of one or more lithium/boron compounds in combination with the components a), b), d) and the optional e) fluoroethylene carbonate can provide secondary batteries with certain benefits, for example, higher discharge capacity and/or longer cycle life, when compared to secondary batteries that do not contain the lithium/boron compounds. Suitable lithium/boron compounds can include, for example, lithium terafluoroborate, lithium bis(oxalato)borate, lithium difluoro(oxalato)borate, and Li₂Bᵢ₂Fᵢ₂-ₓHₓ, wherein x is 0 to 8, mixtures of lithium fluoride and anion receptors, such as B(OC₆F₅)₃. Combinations of the above lithium/boron compounds can also be used. The electrolyte composition can contain an amount of the lithium/boron compound in the range of from 0.1 to about 10.0 percent by weight, based on the total weight of the electrolyte composition. In other embodiments, the lithium/boron compound can be present in the electrolyte composition in the range of from 0.3 to about 4.0 percent by weight, and, in still further embodiments, in the range of from 0.5 to 2.0 percent by weight, wherein the percentages by weight are based on the total weight of the electrolyte composition.

An electrolyte salt is also present in the electrolyte composition. In some embodiments, the electrolyte salt is a lithium salt. Suitable lithium salts can include, for example, lithium hexafluorophosphate (LiPF₆), lithium tris(pentafluoroethyl)trifluorophosphate (LiPF₃(C₂F₅)₃), lithium bis(trifluoromethanesulfonyl)imide, lithium bis(perfluoroethanesulfonyl) imide, lithium (fluorosulfonyl) (nonafluorobutanesulfonyl) imide, lithium bis(fluorosulfonyl)imide, lithium perchlorate, lithium hexafluoroarsenate, lithium trifluoromethanesulfonate, lithium tris(trifluoromethanesulfonyl)methide or a combination thereof. The lithium salt is present in the electrolyte composition in the range of from 0.2 to 2.0 moles/liter (M), or in the range of from 0.3 M to 1.5 M, or from 0.5 M to 1.2 M.

The electrolyte composition can further comprise up to 10 percent by weight of e) fluoroethylene carbonate. It has been found that some electrolyte compositions that contain large amounts of fluoroethylene carbonate can form a gas during high temperature charge and/or discharge of the secondary battery which can be problematic. Excessive off-gassing can cause an increase in the pressure inside an electrolytic cell which can cause rupture of the housing. Further, it has been found that some electrolyte compositions having large amounts of fluoroethylene carbonate, for example greater than 10 percent by weight and up to about 40 percent by weight, based on the total weight of the electrolyte composition, can form electrochemical cells that have a low cycle life. It is important, therefore to keep the amount of fluoroethylene carbonate low, that is, less than or equal to 10 percent by weight of the electrolyte composition. In some embodiments, the amount of fluoroethylene carbonate is less than 9 percent, or, in other embodiments, is less than 8, 7, 6, 5, 4.9, 4.8, 4.7, 4.6, 4.5, 4.4, 4.3, 4.2, 4.1, 4.0, 3.9, 3.8, 3.7, 3.6, 3.5, 3.4, 3.3, 3.2, 3.1, 3.0, 2.9, 2.8, 2.7, 2.6, 2.5, 2.4, 2.3, 2.2, 2.1, 2.0, 1.9, 1.8, 1.7, 1.6, 1.5, 1.4, 1.3, 1.2, 1.1, 1.0, 0.9, 0.8, 0.7, 0.6 or 0.5 percent by weight. All percentages by weight are based on the total weight of the electrolyte composition.

In some embodiments, the electrolyte composition comprises or consists essentially of:
a) in the range of from 5 to 90 percent by weight of 2,2-difluoroethyl acetate;
b) in the range of from 10 to 80 percent by weight of ethylene carbonate;
c) in the range of from 0.1 to 10 percent by weight of lithium bis(oxalato)borate; and
d) lithium hexafluorophosphate,
wherein the percentages by weight are based on the total weight of components a), b), c) and the optional e) fluoroethylene carbonate. In some embodiments, the composition comprises or consists essentially of:
a) in the range of from 5 to 90 percent by weight of 2,2-difluoroethyl acetate;
b) in the range of from 10 to 80 percent by weight of ethylene carbonate;
c) in the range of from 0.1 to 10 percent by weight of lithium bis(oxalato)borate; and
d) lithium hexafluorophosphate;
wherein all the percentages by weight are based on the total weight of the composition. In some embodiments, the amount of the 2,2-difluoroethyl acetate is in the range of from 30 to 70 percent by weight, based on the total weight of the composition. In further embodiments, the electrolyte composition further comprises in the range of from 0.1 to 5.0 percent by weight of fluoroethylene carbonate, wherein the percentage by weight is based on the total weight of the electrolyte composition.

Electrolyte compositions disclosed herein can additionally or optionally comprise additives that are known to those of ordinary skill in the art to be useful in conventional electrolyte compositions, particularly for use in lithium ion batteries. For example, electrolyte compositions disclosed herein can also include gas-reduction additives which are useful for reducing the amount of gas generated during charging and discharging of lithium ion batteries. Gas-reduction additives can be used in any effective amount, but can be included to comprise from about 0.05 percent to about 10 percent by weight, based on the total weight of the electrolyte composition. Alternatively the gas-reducing additives can be present in the range of from 0.05 to 5 percent by weight of the electrolyte composition, or in still further embodiments, from 0.5 percent to 2 percent by weight of the electrolyte composition. All percentage by weight are based on the total weight of the electrolyte composition.

Suitable gassing additives that can be used are, for example, fluorobenzene, chlorobenzene, bromobenzene, iodobenzene, haloalkylbenzenes, 1,3-propane sultone, succinic anhydride, ethynyl sulfonyl benzene, 2-sulfobenzoic acid cyclic anhydride, divinyl sulfone, triphenylphosphate (TPP), diphenyl monobutyl phosphate (DMP), γ-butyrolactone, 2,3-dichloro-1,4-naphthoquinone, 1,2-naphthoquinone, 2,3-dibromo-1,4-naphthoquinone, 3-bromo-1,2-naphthoquinone, 2-acetylfuran, 2-acetyl-5-methylfuran, 2-methyl imidazole1-(phenylsulfonyl)pyrrole, 2,3-benzofuran, fluoro-cyclotriphosphazenes, 2,4,6-trifluoro-2-phenoxy-4,6-dipropoxy-cyclotriphosphazene, 2,4,6-trifluoro-2-(3-(trifluoromethyl)phenoxy)-6-ethoxy-cyclotriphosphazene, benzotriazole, perfluoroethylene carbonate, anisole, diethylphosphonate, fluoroalkyl-substituted dioxolanes, 2-trifluoromethyldioxolane, 2,2-bistrifluoromethyl-1,3-dioxolane, trimethylene borate, dihydro-3-hydroxy-4,5,5-trimethyl-2(3H)-furanone, dihydro-2-methoxy-5,5-dimethyl-3(2H)-furanone, dihydro-5,5-dimethyl-2,3-furandione, propene sultone, diglycolic acid anhydride, di-2-propynyl oxalate, 4-hydroxy-3-pentenoic acid γ-lactone, CF₃COOCH₂C(CH₃)(CH₂OCOCF₃)₂, CF₃COOCH₂CF₂CF₂CF₂CF₂CH₂OCOCF₃, α-methylene-γ-butyrolactone, 3-methyl-2(5H)-furanone, 5,6-dihydro-2-pyranone, diethylene glycol diacetate, triethylene glycol dimethacrylate, triglycol diacetate, 1,2-ethanedisulfonic anhydride, 1,3-propanedisulfonic anhydride, 2,2,7,7-tetraoxide 1,2,7-oxadithiepane, 3-methyl-, 2,2,5,5-tetraoxide, 1,2,5-oxadithiolane, hexamethoxycyclotriphosphazene, 4,5-dimethyl-4,5-difluoro-1,3-dioxolan-2-one, 2-ethoxy-2,4,4,6,6-pentafluoro-2,2,4,4,6,6-hexahydro-1,3,5,2,4,6-triazatriphosphorine, 2,2, 4,4,6-pentafluoro-2,2,4,4,6,6-hexahydro-6-methoxy-1,3,5,2,4,6-triazatriphosphorine, 4, 5-difluoro-1,3-dioxolan-2-one, 1,4-bis(ethenylsulfonyl)butane, bis(vinylsulfonyl)methane, 1,3-bis(ethenylsulfonyl)propane, 1,2-bis(ethenylsulfonyl)ethane, ethylene carbonate, diethyl carbonate, dimethyl carbonate, ethyl methyl carbonate, 1,1'-[oxybis(methylenesulfonyl)]bisethene or a combination thereof.

In another embodiment, the disclosure relates to a process for forming the electrolyte composition. The process comprises combining:
a) the at least one fluorinated compound represented by R¹COOR²,
b) the non-fluorinated carbonate;
c) the lithium/boron compound, and
d) the lithium salt.
The step of combining can be accomplished by adding the individual components of the electrolyte composition sequentially or at the same time. In some embodiments, the components a), b), c) and the optional e) fluoroethylene carbonate are combined to make a first solution. After the formation of the first solution, an amount of the lithium salt is added to the first solution in order to produce the electrolyte composition having the desired concentration of the lithium salt. Typically, the electrolyte composition is stirred during and/or after the addition of the components in order to form a homogeneous mixture.

In another embodiment, the present disclosure relates to an electrochemical cell comprising or consisting essentially of:
(a) a housing;
(b) an anode and a cathode disposed in the housing and in ionically conductive contact with one another;
(c) the electrolyte composition disposed in the housing and providing an ionically conductive pathway between the anode and the cathode; and
(d) a porous separator between the anode and the cathode. In some embodiments, the electrochemical cell is a lithium ion battery.

The housing may be any suitable container to house the electrochemical cell components. Housing materials are well-known in the art and can include, for example, metal and polymeric housings. While the shape of the housings is not particularly important, suitable housings can be fabricated in the shape of a cylinder, a prismatic case or a pouch.

Many different types of materials are known that can function as the anode or the cathode. In some embodiments, the cathode can include, for example, cathode active materials comprising lithium and transition metals, such as LiCoO₂, LiNiO₂, LiMn₂O₄, LiCo_{0.2}Ni_{0.2}O₂, LiV₃O₈, LiNi_{0.5}Mn_{1.5}O₄, LiFePO₄, LiMnPO₄, LiCoPO₄, and LiVPO₄F. In other embodiments, the cathode active materials can include, for example;
LiₐA_{1-b},R_{b}D₂ (0.90≤a≤1.8 and 0≤b≤0.5);
LiₐE_{1-b}R_{b}O_{2-c}D_{c} (0.90≤a≤1.8, 0≤b≤0.5 and 0≤c≤0.05);
LiₐCoG_{b}O₂ (0.90≤a≤1.8, and 0.001 ≤b≤0.1);
LiₐNi_{1-b-c}Co_{b}R_{c}O_{2-d}Z_{d} where 0.9≤a≤1.8, 0≤b≤0.4, 0≤c≤0.05, and 0≤d≤0.05
Li_{1+z}Ni_{1-x-y}CoₓAl_{y}O₂ where 0<x<0.3, 0<y<0.1, and 0<z<0.06;
LiₐNi_{b}Mn_{c}Co_{d}RₑO_{2-f}Z_{f} where 0.8≤a≤1.2, 0.1≤b≤0.5, 0.2≤c≤0.7, 0.05≤d≤0.4, 0≤e≤0.2, the sum of b+c+d+e is about 1, and 0≤f≤0.08;
In the above chemical formulas A is Ni, Co, Mn, or a combination thereof; D is O, F, S, P, or a combination thereof; E is Co, Mn, or a combination thereof; G is Al, Cr, Mn, Fe, Mg, La, Ce, Sr, V, or a combination thereof, R is Al, Ni, Co, Mn, Cr, Fe, Mg, Sr, V, Zr, Ti, a rare earth element, or a combination thereof; Z is F, S, P, or a combination thereof. Suitable cathodes and cathode active materials include those disclosed in U.S. Patent Nos. 5,962,166; 6,680,145; 6,964,828; 7,026,070; 7,078,128; 7,303,840; 7,381,496; 7,468,223; 7,541,114; 7,718,319; 7,981,544; 8,389,160; 8,394,534; and 8,535,832, and the references therein. By "rare earth element" is meant the lanthanide elements from La to Lu, and Y and Sc.

In another embodiment, the cathode active material is a material exhibiting greater than 30 mAh/g capacity in the potential range greater than 4.6 V versus a Li/Li⁺ reference electrode. In other embodiments, the electrochemical cell is charged to a potential greater than or equal to 4.00 V, 4.10 V, 4.20 V, 4.30 V, 4.35 V, 4.40 V, 4.45 V, 4.5 V, 4.55 V or greater than 4.6 V versus a Li/Li⁺ reference electrode. One example of such a cathode active material is a stabilized manganese cathode comprising a lithium-containing manganese composite oxide having a spinel structure as cathode active material. The lithium-containing manganese composite oxide as a cathode active material can have the formula LiₓNi_{y}M_{z}Mn_{2-y-z}O_{4-d}, wherein x is 0.03 to 1.0; x changes in accordance with release and uptake of lithium ions and electrons during charge and discharge; y is 0.3 to 0.6; M is one or more of Cr, Fe, Co, Li, Al, Ga, Nb, Mo, Ti, Zr, Mg, Zn, V, and Cu; z is 0.01 to 0.18; and d is 0 to 0.3. In some embodiments in the above formula, y is 0.38 to 0.48, z is 0.03 to 0.12, and d is 0 to 0.1. In some embodiments of the above formula, M is one or more of Li, Cr, Fe, Co and Ga. Stabilized manganese cathodes may also comprise spinel-layered composites which contain a manganese-containing spinel component and a lithium rich layered structure, as described in U.S. Patent No. 7,303,840. Other examples are layered-layered high-capacity oxygen-release cathodes such as those described in U.S. Patent No. 7,468,223 charged to upper charging potentials above 4.5 V.

The cathode active material can be prepared using methods such as, for example, the hydroxide precursor method described by Liu et al (J. Phys. Chem. C 13:15073-15079, 2009). In that method, hydroxide precursors are precipitated from a solution containing the required amounts of manganese, nickel and other desired metal(s) acetates by the addition of KOH. The resulting precipitate is oven-dried and then fired with the required amount of LiOH•H₂0 at about 800 to about 950°C in oxygen for 3 to 24 hours, as described in detail in the Examples herein. Alternatively, the cathode active material can be prepared using a solid phase reaction process or a sol-gel process as described in U.S. Patent No. 5,738,957.

The cathode, in which the cathode active material is contained, can be prepared by mixing an effective amount of the cathode active material, for example, about 70 percent to about 97 percent by weight, with a polymer binder, such as polyvinylidene difluoride, and conductive carbon in a suitable solvent, such as N-methylpyrrolidone, to generate a paste, which is then coated onto a current collector such as aluminum foil, and dried to form the cathode. The percentage by weight is based on the total weight of the cathode.

The electrochemical cell further contains an anode, which comprises an anode active material that is capable of storing and releasing lithium ions. Examples of suitable anode active materials include, for example, lithium alloys such as lithium-aluminum alloy, lithium-lead alloy, lithium-silicon alloy, lithium-tin alloy; carbon materials such as graphite and mesocarbon microbeads (MCMB); phosphorus-containing materials such as black phosphorus, MnP₄ and CoP₃; metal oxides such as SnO₂, SnO and TiO₂; nanocomposites containing antimony or tin, for example nanocopmposites containing antimony, oxides of aluminum, titanium, or molybdenum, and carbon, such as those described by Yoon et al (Chem. Mater. 21, 3898-3904, 2009); and lithium titanates such as Li₄Ti₅O₁₂ and LiTi₂O₄. In some embodiments, the anode active material is lithium titanate or graphite.

The anode can be made by a method similar to that described above for a cathode wherein, for example, a binder such as a vinyl fluoride-based copolymer is dissolved or dispersed in an organic solvent or water is mixed with the anode active material to obtain a paste. The paste is coated onto a metal foil, preferably aluminum or copper foil, to be used as the current collector. The paste is dried, preferably with heat, so that the anode active material is bonded to the current collector. Suitable anode active materials and anodes are available commercially from companies such as Hitachi, NEI Inc. (Somerset, NJ), and Farasis Energy Inc. (Hayward, CA).

The electrochemical cell further comprises a porous separator between the anode and the cathode. The porous separator serves to prevent short circuiting between the anode and the cathode. The porous separator typically consists of a single-ply or multi-ply sheet of a microporous polymer such as polyethylene, polypropylene, polyamide, polyimide, or a combination thereof. The pore size of the porous separator is sufficiently large to permit transport of ions to provide an ionically conductive contact between the anode and cathode, but small enough to prevent contact of the anode and cathode either directly or from particle penetration or dendrites which can form on the anode and cathode. Examples of porous separators suitable for use herein are disclosed in U.S. Patent Application Publication No. 2012/0149852, now U.S. Patent No. 8,518,525.

The electrochemical cell as disclosed herein can be used in a variety of applications. For example, the electrochemical cell can be used for grid storage or as a power source in various electrically powered or assisted devices, such as, a computer, a camera, a radio, a power tool, a telecommunication device, or a transportation device. The present disclosure also relates to an electronic device, a telecommunication device, or a transportation device comprising the disclosed electrochemical cell.

### EXAMPLES

Unless otherwise noted, all ingredients are available from the Sigma-Aldrich Company, St. Louis, Missouri.

TimCal Super C-65 carbon black is available from TimCal Graphite and Carbon, Westlake, Ohio.

SOLEF® and SF-6020 PVDF polymers are available from Solvay, West Deptford, New Jersey.

Farasis NMC 111 Ni, Mn, Co cathode active powder is available from Farasis Energy, Hayward, California.

Denka carbon black is available from Denka Corporation, Tokyo, Japan.

THINKY® containers and ARE-310 mixers are available from THINKY USA Inc., Laguna Hills, California.

Ethylene carbonate, fluoroethylene carbonate, lithium hexafluorophosphate (LiPF₆), and NOVOLYTE® electrolyte are available from BASF, Florham Park, New Jersey.

Anhydrous iron (II) acetate is available from Alfa Aesar, Ward Hill Massachusetts.

In the examples below, the following abbreviations are used:
wt% means weight percent
pbw means parts by weight
ppm means parts per million
DFEA means 2,2-difluoroethyl acetate
EC means ethylene carbonate
FEC means 4-fluoroethylene carbonate
EMC means ethyl methyl carbonate
Et propionate means ethyl propionate
LiBOB means lithium bis(oxalato)borate

### Preparation of the Electrolyte Components

### Preparation of 2,2-difluoroethyl acetate

Potassium acetate was dried at 100°C under a vacuum of 0.5-1 mm of mercury (66.7-133 Pa) for 4 to 5 hours. The dried material had a water content of less than 5 ppm, as determined by Karl Fischer titration. In a dry box, 212 grams (2.16 mol, 8 mol% excess) of the dried potassium acetate was placed into a 1.0-L, 3 neck round bottom flask containing a heavy magnetic stir bar. The flask was removed from the dry box, transferred into a fume hood, and equipped with a thermocouple well, a dry-ice condenser, and an addition funnel.

Sulfolane (500 mL, 600 ppm of water as determined by Karl Fischer titration) was melted and added to the 3 neck round bottom flask as a liquid under a flow of nitrogen. Agitation was started and the temperature of the reaction medium was brought to about 100°C. HCF₂CH₂Br (290 grams, 2 mol, E.I. du Pont de Nemours and Co., 99%) was placed in the addition funnel and was slowly added to the reaction medium. The addition was mildly exothermic and the temperature of the reaction medium rose to 120-130°C in 15-20 min after the start of the addition. The addition of HCF₂CH₂Br was kept at a rate which maintained the internal temperature at 125-135°C. The addition took about 2-3 hours. The reaction medium was agitated at 120-130°C for an additional 6 hours. Then, the reaction medium was cooled down to room temperature and was agitated overnight. The heating was then resumed for another 8 hours.

At this point the starting bromide was not detectable by NMR and the crude reaction medium contained 0.2-0.5% of 1,1-difluoroethanol. The dry-ice condenser on the reaction flask was replaced by a hose adapter with a TEFLON® valve and the flask was connected to a mechanical vacuum pump through a cold trap containing dry-ice/acetone. The reaction product was transferred into the cold trap at 40-50°C under a vacuum of 1-2 mm mercury (133 to 266 Pa). The transfer took about 4-5 hours and resulted in 220-240 grams of crude HCF₂CH₂OC(O)CH₃ of about 98-98.5% purity, which was contaminated by a small amount of HCF₂CH₂Br (about 0.1-0.2%), HCF₂CH₂OH (0.2-0.8%), sulfolane (about 0.3-0.5%) and water (600-800 ppm). Further purification of the crude product was carried out using spinning band distillation at atmospheric pressure. The fraction having a boiling point between 106.5-106.7°C was collected and the impurity profile was monitored using GC/MS (capillary column HP5MS, phenyl-methyl siloxane, AGILENT® 19091S-433). The distillation of 240 g of crude product gave about 120 grams of HCF₂CH₂OC(O)CH₃ of 99.89% purity, (250-300 ppm H₂O) and 80 g of material of 99.91% purity (containing about 280 ppm of water). Water was removed from the distilled product by treatment with 3A molecular sieves, until water was not detectable by Karl Fischer titration (i.e., <1 ppm).

### Purification of Lithium bis(oxalato)borate

In a nitrogen purged dry box, 11.25 grams of lithium bis(oxalato)borate was added to a 400 mL beaker with 50 mL anhydrous acetonitrile. The mixture was stirred at 40°C for about 30 minutes. The warm mixture was filtered through a Whatman #1 filter and transferred to a second beaker and allowed to cool to room temperature to obtain a clear solution. About 50 mL of cold (-30°C) anhydrous toluene was added and the mixture was stirred for 30 minutes. A precipitate formed and was filtered through a Whatman #1 filter. The filter cake was washed with the cold anhydrous toluene. After allowing the filter cake to dry on a vacuum filtration funnel, the solids were removed from the dry box and placed in a vacuum oven set to 130°C and dried overnight (15 hours) with a slight nitrogen purge to give lithium bis(oxalato)borate, which was subsequently handled in the nitrogen purged dry box.

### Preparation of Electrolyte Composition A (comparative)

The electrolyte solution was prepared by combining 70 wt% 2,2-difluoroethyl acetate and 30 wt% ethylene carbonate in a nitrogen purged dry box. 3 angstrom (3A) molecular sieves were added and the mixture was dried to less than 1 ppm water. After filtration through a 0.25 micrometer PTFE syringe filter, enough LiPF₆ was added to make a 1 molar solution of the electrolyte.

### Preparation of Electrolyte Composition B (comparative)

8.802 grams of 2,2-difluoroethyl acetate and 5.8619 grams of fluoroethylene carbonate were combined in a nitrogen dry box. Molecular sieves (3A) were added and the mixture was dried to less than 1 ppm water. The solution was then filtered through a 0.25 micrometer PTFE syringe filter. Enough LiPF₆ was added to make a 1 molar electrolyte composition.

### Preparation of Electrolyte Composition C (comparative)

2.9402 grams of Electrolyte Composition B was combined with 0.0602 grams of lithium bis(oxalato)borate to form Electrolyte Composition C.

### Preparation of Electrolyte Composition D (comparative)

Electrolyte Composition D was a 70:30 volume/volume mixture of ethyl methyl carbonate and ethylene carbonate wherein LiPF₆ was added to make a 1 molar solution.

### Preparation of Electrolyte Composition E (comparative)

Ethyl propionate was purified by distillation to 99.96% purity. Molecular sieves (3A) were added to the distilled solvent. The electrolyte composition was prepared by combining 70 wt% of ethyl propionate with 30 wt% ethylene carbonate in a nitrogen purged dry box. Molecular sieves (3A) were added to the solvent mixture to bring the water content to less than 1ppm. Enough LiPF₆ was added to produce a 1.0 M solution of LiPF₆ in the dried solvent.

### Preparation of Electrolyte Composition F (comparative)

1.96 pbw of Electrolyte Composition E was combined with 0.04 pbw of lithium bis(oxalato)borate to produce Electrolyte Composition F.

### Preparation of Electrolyte Composition G (comparative)

The electrolyte composition was prepared by combining 75 wt% of 2,2-difluoroethyl acetate with 25 wt% of fluoroethylene carbonate in a nitrogen purged dry box. Molecular sieves (3A) were added to the mixture to bring the water content to less than 1 ppm. The solution was then filtered through a 0.25 micrometer PTFE syringe filter. LiPF₆ was added to make the final composition 11.3 wt% in LiPF₆ which is approximately 1.0 molar LiPF₆. 0.98 pbw of this solution was combined with 0.02 pbw of lithium bis(oxalato)borate to provide Electrolyte Composition G (comparative).

### Preparation of Electrolyte Composition H (comparative)

0.99 pbw of Electrolyte Composition D (comparative) and 0.01 pbw of fluoroethylene carbonate were combined to give Electrolyte Composition H (comparative).

### Preparation of Electrolyte Composition I (comparative)

0.98 pbw of Electrolyte Composition D (comparative) and 0.02 pbw of fluoroethylene carbonate were combined to give Electrolyte Composition I (comparative).

### Preparation of Electrolyte Composition J (comparative)

0.96 pbw of Electrolyte Composition D (comparative) 0.02 pbw of fluoroethylene carbonate and 0.02 pbw of lithium bis(oxalato)borate were combined to give Electrolyte Composition J (comparative).

### Preparation of Electrolyte Composition K (comparative)

0.99 pbw of Electrolyte Composition A (comparative) and 0.01 pbw of fluoroethylene carbonate were combined to give Electrolyte Composition K (comparative).

### Preparation of Electrolyte Composition L (comparative)

0.98 pbw of Electrolyte Composition A (comparative) and 0.02 pbw of fluoroethylene carbonate were combined to give Electrolyte Composition L (comparative).

### Preparation of Electrolyte Composition M (comparative)

1.9603 grams of Electrolyte Composition D (comparative) and 0.0407 grams of lithium bis(oxalato)borate were combined to give Electrolyte Composition M (comparative).

### Preparation of Electrolyte Composition #1

Lithium bis(oxalato)borate (0.0410 grams) was added to 1.962 grams of Electrolyte Composition A (comparative).

### Preparation of Electrolyte Composition #2

0.99 pbw of Electrolyte Composition A (comparative) and 0.01 pbw of lithium bis(oxalato)borate were combined.

### Preparation of Electrolyte Composition #3

0.96 pbw of Electrolyte Composition A (comparative) was combined with 0.02 pbw of fluoroethylene carbonate and 0.02 pbw of lithium bis(oxalato)borate.

### Preparation of Electrolyte Composition #4

0.97 pbw of Electrolyte Composition A (comparative) was combined with 0.02 pbw of fluoroethylene carbonate and 0.01 pbw of lithium bis(oxalato)borate.

Table 1 provides a summary of the prepared electrolyte compositions. Electrolyte compositions A through M are comparative compositions.

**TABLE 1**

| Electrolyte Composition | Solvent Mixture | Fluoroethylene carbonate (wt%)¹ | LiBOB (wt%)² |
|---|---|---|---|
| A | DFEA:EC | 0 | 0 |
| B | DFEA:FEC | 40 | 0 |
| C | DFEA:FEC | 40 | 2 |
| D | EMC:EC | 0 | 0 |
| E | Et propionate:EC | 0 | 0 |
| F | Et propionate:EC | 0 | 2 |
| G | DFEA:FEC | 25 | 2 |
| H | EMC:EC:FEC | 1 | 0 |
| I | EMC:EC:FEC | 2 | 0 |
| J | EMC:EC:FEC | 2 | 2 |
| K | DFEA:EC:FEC | 1 | 0 |
| L | DFEA:EC:FEC | 2 | 0 |
| M | EMC:EC | 0 | 2 |
| 1 | DFEA:EC | 0 | 2 |
| 2 | DFEA:EC | 0 | 1 |
| 3 | DFEA:EC:FEC | 2 | 2 |
| 4 | DFEA:EC:FEC | 2 | 1 |

| | | | |
|---|---|---|---|
| Notes: 1. The weight percentage of the fluoroethylene carbonate in solvent mixtures B, C and G is based on the weight of the solvent mixture. The weight percentage of the fluoroethylene carbonate in solvent mixtures H, I, J, K, L, 3 and 4 is based on the total weight of the electrolyte composition. 2. The weight percentage of LiBOB is based on the total weight of the composition. | | | |

### Example 1 - NMC cathode secondary batteries

### Preparation of primer for aluminum foil

A pyromellitic dianhydride//ODA (4,4'-diaminodiphenyl ether) prepolymer was first prepared using a stoichiometry of 0.98:1 PMDA/ODA. The prepolymer was prepared by dissolving ODA in N-methylpyrrolidone (NMP) over the course of approximately 45 minutes at room temperature with gentle agitation. PMDA powder was slowly added (in small aliquots) over approximately two hours to the mixture to control any temperature rise in the solution. The final concentration of the polyamic acid was 20.6 wt % and the molar ratio of the anhydride to the amine component was approximately 0.98:1.

In a separate container, a 6 wt% solution of pyromellitic anhydride (PMDA) was prepared by combining 1.00 grams of PMDA and 15.67 g of NMP (N-methylpyrrolidone). 4.0 grams of the PMDA solution was slowly added to the prepolymer and the viscosity increased to approximately 90,000 poise (as measured by a Brookfield viscometer - # 6 spindle).

5.196 grams of the finished prepolymer solution was then diluted with 15.09 grams of NMP to create a 5 wt% solution. In a vial, 16.2342 grams of the diluted finished prepolymer solution was added to 0.1838 grams of TimCal Super C-65 carbon black. This was further diluted with 9.561 grams of NMP for a final solids content of 3.4 wt%.

This mixture was sprayed onto two pieces of aluminum foil (25 µm thick, catalogue #1145-0, Allfoils, Brooklyn Heights, OH) using a Paasche VL# 3 Airbrush sprayer (Paasche Airbrush Company, Chicago, IL). Each piece of aluminum foil was weighed prior to spraying and a sufficient amount of the solution was coated onto the foil in order to produce a dry layer of the polymer having a mass of 0.06 milligrams/cm². The foil was smoothed onto a glass plate, and sprayed by hand with the airbrush until coated. The foil was then dried at 125°C on a hot plate, and measured to ensure that the desired density was reached. Once the foil was dried and at the desired coating, the foil was imidized at 400°C following the imidization procedure:
40°C to 125°C (ramp at 4°C/min)
125°C to 125°C (soak 30 min)
125°C to 250°C (ramp at 4°C/min)
250°C to 250°C (soak 30 min)
250°C to 400°C (ramp at 5°C/min)
400°C to 400°C (soak 20 min) to produce a layer of primer on the two pieces of aluminum foil.

### Preparation of the NMC cathode paste

SOLEF® 5130 polyvinylidene fluoride (PVDF) was diluted to 5.5 wt% in NMP. A paste was produced by mixing 6.0352 grams of Farasis 1,1,1 NMC powder, 0.3342 grams of Denka carbon black, 6.0971 grams of the Solef® PVDF solution, and 2.1491 grams of NMP in a plastic THINKY® container. The paste was centrifugally mixed using a THINKY® ARE-310 mixer for 2 minutes at 2000 rpm. After the 2 minute mixing period was complete, a second portion of 0.3858 grams of NMP was added followed by centrifugally mixing for 2 minutes at 2000 rpm. When this mixing cycle was completed, an ultrasonic horn, available from the Dukane Corporation, St. Charles, Illinois, was immersed into the paste and ultrasonic energy was applied for approximately 3 seconds. The final NMC cathode paste contained 44.7 wt% of solids.

### Preparation of the NMC cathode

The NMC cathode paste produced above was manually cast onto the primed aluminum foil using doctor blades with a 127 micrometer (5 mil) gate height plus 50.8 micrometers (2 mil) of KAPTON® tape to produce a total gate opening of 177.8 micrometers (7 mil). The coated aluminum foil was then dried for 60 minutes in a vacuum oven set to 90°C. The resulting 51 mm wide NMC cathodes were placed between 125mm thick brass sheets and passed through a calendar three time using 100mm diameter steel rolls at 125°C with the pressure increasing with each pass at pressures of 1.26 kg/cm², 1.68 kg/cm² and 2.11 kg/cm² (18 psi, 24 psi and 30 psi). The calendar was set to have a nip force (in lb) = 37.8 x regulator pressure (psi). Loadings of the NMC cathode active material were approximately 7.57 to 8.0 mg/cm².

### NMC Coin cell fabrication

Circular anodes 14.3mm in diameter were punched out of Farasis EAR-0145-3 anode sheets. Circular cathodes 12.7mm in diameter were punched out of the NMC cathodes prepared above. The two electrodes were placed in the antechamber of a glove box and were dried at 90°C overnight. The dried electrodes were then introduced into the argon-filled glove box. CR2032 coin cells were prepared for electrochemical evaluation using the various electrolyte compositions. The coin cell parts (case, spacers, wave spring, gasket and lid) and coin cell crimper are available from Hohsen Corporation Osaka, Japan. The separator was CELGARD® 2500, available from Celgard/Polypore International, Charlotte, North Carolina.

### NMC Coin cell evaluations

Each coin cell was cycled twice for formation using a commercial battery tester (Series 4000, Maccor, Tulsa, Oklahoma) at ambient temperature using a constant current charging and discharging between voltage limits of 3.0 to 4.6 V at a current of 17.5 mA per gram of NMC cathode active material, which was approximately a 0.1C rate. Following this procedure, the coin cells were cycled using constant charging and discharging between voltage limits of 3.0 to 4.6 V at a current of 87.5 mA per gram of cathode active material, which was approximately a C/2 rate. During each charge step, the voltage was held at 4.6 V until the current tapered to C/20, approximately 8.75 mA per gram of cathode active material. Each coin cell was tested three times and the average values for the three runs are shown.

The results are shown in Table 2, below. The column labelled "80% Cycle Life" shows the average number of discharge/charge cycles which are needed for the cell to reach 80% of its initial capacity, and is a measure of cycle life durability. The column labelled "Cap Disc Cy10" shows the discharge capacity of the cell, in MAh/g, at the tenth discharge cycle. The column labelled "CE Cy10" shows the coulombic efficiency of the tenth cycle at 87.5 mA/g of positive active material, and is defined as the capacity of the tenth discharge at 87.5 mA/g divided by the capacity of the tenth charge at 87.5 mA/g. The column labelled "Pos Disc1" indicates the specific discharge capacity in mAh/g of positive active material on the first cycle at 17.5 mA/g. The column labelled "CE in first cycle" presents the coulombic efficiency of the first cycle at 17.5 mA/g of positive active material, and is defined as the capacity of the first discharge at 17.5 mA/g divided by the capacity of the first charge at 17.5 mA/g.

**TABLE 2**

| NMC Coin cell | Electrolyte Composition | 80% Cycle Life | Cap Disc Cy10 mAh/g | CE Cy10 % | Pos Disc1 mAh/g | CE in first cycle % |
|---|---|---|---|---|---|---|
| 1 | C (comparative) | 480 | 179 | 99.67 | 187 | 79.84 |
| 2 | M (comparative) | 380 | 178 | 99.51 | 182 | 79.49 |
| 3 | 1 | 579 | 172 | 99.23 | 181 | 77.00 |

The results of Table 2 show that an electrochemical cell (NMC coin cell 3) produced according the above disclosure and containing an electrolyte composition comprising a fluorinated ester solvent, a non-fluorinated carbonate, a lithium/boron compound and a lithium salt, as disclosed herein, produces a battery having a much longer 80% cycle life when compared to comparative NMC coin cell 1 (about 20% longer) and NMC coin cell 2 (about 50% longer). NMC coin cell 1 used comparative Electrolyte Composition C containing about 40 percent fluoroethylene carbonate and 60 percent 2,2-difluoroethyl acetate, and NMC coin cell 2 used comparative Electrolyte Composition M containing a standard (non-fluorinated) electrolyte solvent mixture of 70/30 (volume/volume) ethyl methyl carbonate and ethylene carbonate, while NMC coin cell 3 used Electrolyte Composition 1 containing 70/30 (weight/weight) 2,2-difluoroethyl acetate/ethylene carbonate; all of these electrolyte compositions contained comparable amounts of LiPF₆ and lithium bis(oxalato)borate.

### Preparation of spinel (LiMn_{1.5}Ni_{0.45}Fe_{0.05}O₄) cathode active material

401 grams of manganese (II) acetate tetrahydrate, 125 nickel (II) acetate tetrahydrate and 10 grams of iron (II) acetate anhydrous were dissolved in 5.0 liters of deionized water. Potassium hydroxide pellets were dissolved in 10 liters of deionized water to produce a 3.0 M solution inside a 30 liter reactor. The solution containing the metal acetates was transferred to an addition funnel and dripped into the rapidly stirred reactor to precipitate the mixed hydroxide material. Once the addition was complete, stirring was continued for 1 hour. The stirring was then stopped and the precipitate was allowed to settle overnight. The liquid was removed from the reactor and 15 liters of deionized water was added. The contents of the reactor were stirred, allowed to settle, and the liquid was removed. The rinse process was then repeated. The precipitate was then transferred, approximately evenly, into two coarse fritted glass filtration funnels that had been covered with DACRON® filter paper. The solids were rinsed with deionized water until the filtrate had a pH of 6.0. A further 20 liters of deionized water was added to each filter cake. The cakes were then dried in a vacuum oven set to 120°C overnight.

50 grams of the hydroxide precipitate was ground for 5 minutes using a Pulverisette automated mortar and pestle, available from Fritsche, Oberstein, Germany. The ground hydroxide was then mixed with 10.5 grams of lithium carbonate and and the grinding was continued for 60 minutes, stopping every 10 to 15 minutes to scrape the material off of the surfaces of the mortar and pestle.

The ground material was fired in an air box furnace inside shallow rectangular alumina trays. The trays measured 158 mm by 69 mm in size and each held about 60 grams of material. The firing was conducted at a temperature that began at room temperature and ramped to 900°C in 15 hours, and was held at 900°C for 12 hours. The fired mixture was then cooled to room temperature over 15 hours. After firing, the powder was ball-milled to reduce the particle size. 54 grams of the powder was then mixed with 54 grams of isopropyl alcohol and 160 grams of 5 mm diameter zirconia beads inside a polyethylene jar. The jar was then rotated on a pair of rollers for 6 hours to mill the powder. The slurry was separated by centrifugation and the powder was dried at 120°C to remove moisture to give the spinel (LiMn_{1.5}Ni_{0.45}Fe_{0.05}O₄) cathode active material.

### Preparation of spinel cathode paste

A 5.5 wt% solution of PVDF in NMP was prepared. 4.32 grams of the PVDF solution, 0.52 grams of carbon black and 7.76 grams of NMP were combined in a plastic vial and centrifugally mixed using an ARE-310 mixer two times for 60 seconds each time. 4.16 grams of the spinel cathode active material and 1.40 grams of NMP were then added to the mixture and the paste was mixed two times at 2000 rpms for 1 minute each time. The vial was then placed in an ice bath and the rotator shaft of a homogenizer (model PT 10-35 GT, 7.5 mm diameter stator, available from Kinematica, Bohemia, new York) was inserted into the vial. The gap between the vial top and the stator was wrapped with aluminum foil to minimize water ingress into the vial. The resulting paste was homogenized two times for 15 minutes each time at 6500 rpm and then twice more for 15 minutes each time at 9500 rpm. Between each of the homogenization periods, the homogenizer was moved to another position in the paste vial.

### Preparation of spinel cathode

The spinel cathode paste was cast onto primed aluminum foil (prepared above) using an automatic coater (AFA-II, MTI Corporation, Richmond, California) using doctor blades with a 0.41 to 0.51 mm gate height. The electrodes were dried for 30 minutes at 95°C in a mechanical convection oven (model FDL-115, Binder Inc., Great River New York. The resulting 51 mm wide cathodes were placed between 125 mm thick brass sheets and passed through a calendar three times using 100 mm diameter steel rolls at ambient temperature with nip forces increasing in each of the passes, starting at 260 kg with the first pass and ending at 770 kg for the final pass. Loadings of the cathode active material was 7 to 8 mg/cm².

### Preparation of anode #1

An anode paste was prepared by combining 0.0097 grams of oxalic acid, 0.2743 grams of TimCal Super C65 carbon black, 11.0 grams of NMP and 3.06 grams of a PVDF solution (13% in NMP, available from Kureha America Inc., New York, New York) in a plastic vial. The ingredients were mixed for 60 seconds at 2000 rpm using a planetary centrifugal mixer. The mixing was repeated a second time. 5.00 grams of graphite (CPREME® G5, available from Conoco-Philips, Houston, Texas) was then added to the paste and the mixture was mixed two times. The vial was then mounted in an ice bath and homogenized twice using a rotor-stator for 15 minutes each time at 6500 rpm and then twice more for 15 minutes each time at 9500 rpm. The point where the stator shaft entered the vial was wrapped with aluminum foil to minimize water vapor ingress to the vial. Between each of the four homogenization periods, the homogenizer was moved to another position in the paste vial. The paste was then centrifugally mixed three times.

The paste was then cast using a doctor blade with a 230 micrometer gate on to copper foil (CF-LBX-10, available from Fukuda Metal Foil and Powder Co., Kyoto, Japan) using an automatic coater. The electrodes were dried for 30 minutes at 95°Cin a mechanical convection oven. The resulting 51 mm wide anodes were placed between 125 micrometer thick brass sheets and passed through a calendar 3 times using 100 mm diameter steel rolls at ambient temperature with nip forces increasing in each of the passes, starting at 260 kg with the first pass and increasing to 770 kg in the final pass. Loadings of the anode active material was in the range of from 3 to 4 mg/cm².

### Spinel coin cell fabrication

CR2052 Coin cells were prepared using the spinel cathode, anode #1, and the various electrolyte compositions indicated in Table 3. The coin cells were cycled twice for formation using a commercial battery tester (Series 4000, Maccor, Tulsa, Oklahoma) at ambient temperature using constant current charging and discharging between voltage limits of 3.4 to 4.9 V and using constant currents of 12 mA per gram of cathode active material. Following the formation of the coin cells, the cells were placed in an oven at 55°C and cycled using constant current charging and discharging between voltage limits of 3.4 to 4.9 V at a current of 240 mA per gram of cathode active material, which is approximately a 2C rate for 250 cycles.

The discharge capacity retention at 250 cycles at 55°C is recorded in Table 3. Three coin cells were tested for each electrolyte solution and the average of the three tests is given. The theoretical capacity of each cell was determined as follows. Each cathode punch out was individually weighed and the mass of inactive materials was subtracted to arrive at the mass of active cathode material. The mass of active cathode material in grams was then multiplied by the nominal cathode active capacity of 120 mAh per gram to arrive at a theoretical capacity for the cell. The capacity retained at 250 cycles was calculated as the percentage of capacity remaining when compared to the theoretical capacity of each cell. The retained capacities for each cell and electrolyte composition in Table 3 is an average based on the retained capacity of 3 individual trials.

**TABLE 3**

| Spinel Coin Cell | Electrolyte Composition | Capacity Retained at 250 cycles (55°C) |
|---|---|---|
| 1 | A (comparative) | 38% |
| 2 | E (comparative) | 14% |
| 3 | F (comparative) | 25% |
| 4 | 1 | 78% |

The results in Table 3 show that a coin cell (cell 4) produced using the disclosed electrolyte composition has a 250 cycle retained capacity much greater than that of coin cells made with the comparative electrolyte compositions (cells 1, 2, and 3).

Additional CR2032 coin cells were prepared using the spinel cathode, anode #1, and the electrolyte compositions indicated in Table 4. Following the formation of the coin cells, the cells were placed in an oven at 55°C and cycled using constant current charging and discharging between voltage limits of 3.4 to 4.9 V at a current of 240 mA per gram of cathode active material, which is approximately a 2C rate. The cells were cycled until the discharge capacity decreased to below 80% of the initial maximum discharge capacity at 55 °C. Results are shown in Table 4.

**TABLE 4**

| Spinel Coin cell | Electrolyte Composition | CE in 1^{st} cycle % | CE in 10^{th} cycle % | Discharge Capacity (1^{st} cycle) mAh/g | Discharge Capacity (10^{th} cycle) mAh/g | 80% Cycle Life |
|---|---|---|---|---|---|---|
| 5 | (comparative) | 72.33 | 97.96 | 45.3 | 41 | - |
| 6 | H (comparative) | 78.40 | 98.56 | 111 | nt | 57 |
| 7 | I (comparative) | 77.77 | 98.74 | 104 | nt | 99 |
| 8 | J (comparative) | 76.27 | 99.10 | 110 | nt | 288 |
| 9 | K (comparative) | 79.20 | 98.85 | 108 | nt | 67 |
| 10 | L (comparative) | 77.14 | 99.06 | 107 | nt | 158 |
| 11 | 1 | 75.18 | 99.17 | 102 | nt | 446 |
| 12 | 2 | 73.89 | 99.27 | 113 | nt | 578 |
| 13 | 3 | 74.56 | 99.32 | 97 | nt | 478 |
| 14 | 4 | 75.33 | 99.37 | 113 | nt | 626 |

| | | | | | | |
|---|---|---|---|---|---|---|
| Note: "nt" means not tested | | | | | | |

The results in Table 4 show that the coulombic efficiency (CE) in the tenth cycle for coin cells 11 to 14 is higher than that of coin cells with the comparative electrolyte compositions, and the 80% cycle life for coin cells 11 to 14, using the electrolyte composition of the present disclosure, is much higher than that of coin cells comprising comparative electrolyte compositions. For coin cell 5, the results of the Pos Disc1 was too low indicating that the combination of electrodes and electrolyte composition did not form an acceptable electrochemical cell. The 80% cycle life is therefore not displayed. It should be noted that small differences in coulombic efficiency are very important. Roughly speaking, a 0.1% difference in coulombic efficiency can result in a 20% loss in 200 cycles.

### Preparation of spinel (LiMn_{1.5}Ni_{0.45}Fe_{0.05}O₄) cathode #2

86 parts by weight of the cathode active material (prepared above) was mixed with 7 parts by weight of SF-6020 PVDF solution and 7 parts by weight of Timcal Super C65 carbon black to form a dispersion. The dispersion was coated onto 17 micrometer thick aluminum foil at a loading of 9.1 mg of the cathode active material per square centimeter and the cathodes were calendared by a method similar to that used for NMC cathode electrode above. The thickness and mass of a portion of the calendared electrode were measured and used to calculate the electrode density. The theoretical electrode density without voids was calculated from the composition and the densities of the components. From the actual and theoretical densities, the porosity was calculated to be about 43%.

### Preparation of anode #2

A dispersion of CPREME® G5 graphite in NMP was coated onto 10 micrometer thick copper foil and dried in a convection oven to give an anode with a composition of 88:0.17:7:4.83 (graphite:oxalic acid:PVDF:carbon Super C65). The loading of the anode material was 4.8 milligrams of graphite per square centimeter and the anodes were calendared to a porosity of about 30%. The porosity of the electrode was calculated using the same method as given above.

### Preparation of pouch cells

Cathode #2 was punched out to a size of 31.3 mm by 45 mm size. Anode #2 was punched out to 32.4 by 46.0 mm size. Aluminum and nickel tabs were ultrasonically welded to the current collectors and single layer pouch cells were assembled using a foil-polymer laminate pouch material, available from MTI Corporation, Richmond, California. The tabs were sealed into the top of the pouch leaving two sides and the bottom open. The pouch was dried in the antechamber of a dry box under vacuum overnight at 90°C. Inside the argon-filled dry box, a microporous polyolefin separator (Celgard 2500, Charlotte, NC) was placed between the anode and cathode, and the sides sealed. The electrolyte (700 µl), as indicated in Table 5, was injected through the bottom, and the bottom edge sealed in a vacuum sealer.

The cells were subjected to two formation cycles between voltage limits of 3.4 - 4.9 V at 25 °C and using constant currents (CC) of 12 mA per g of cathode active material. The cells were then cycled six times at 25 °C and their DC resistance was measured. The cells were placed in an oven at 55 °C and cycled using constant current charging and discharging between voltage limits of 3.4 - 4.9 V at a current of 240 mA per gram of cathode active material, which is approximately a 2C rate. The number of cycles required for the discharge capacity to decay to 80% of the maximum discharge capacity obtained in the first twenty cycles at 55 °C is recorded in Table 5.

**TABLE 5**

| Pouch Cell | Electrolyte Composition | 80% Cycle Life |
|---|---|---|
| 1 | G (comparative) | 198 |
| 2 | G (comparative) | 155 |
| 3 | 3 | 273 |
| 4 | 3 | 263 |

The results in Table 5 show that pouch cells containing electrolyte compositions prepared according to the present disclosure have a much longer cycle life than do pouch cells containing an electrolyte composition having relatively higher concentration of fluoroethylene carbonate. The 80% cycle life is on average about 50% longer for pouch cells 3 and 4 when compared to pouch cells 1 and 2.

## Claims

1. An electrolyte composition comprising:
a) at least one fluorinated compound represented by R¹COOR²;
b) a non-fluorinated carbonate;
c) from 0.1 to 10.0 percent by weight of a lithium/boron compound, which is lithium bis(oxalate)borate, based on the total weight of the electrolyte composition; and
d) a lithium salt, which is lithium hexafluorophosphate;
wherein R¹ and R² independently represent a linear or branched alkyl group; the sum of carbon atoms in R¹ and R² is 2 to 7; at least two hydrogen atoms in R¹ and/or R² are replaced by fluorine atoms; and neither R¹ nor R² contains a -CH₂F or -CHF- group.

2. The electrolyte composition of claim 1, wherein the electrolyte composition further comprises up to 10 percent by weight of fluoroethylene carbonate.

3. The electrolyte composition of claim 1 or claim 2, wherein the fluorinated compound is CH₃CO₂CH₂CF₂H, CH₃CH₂CO₂CH₂CF₂H, F₂CHCH₂CO₂CH₃, F₂CHCH₂CO₂CH₂CH₃, CH₃CO₂CH₂CH₂CF₂H, CH₃CH₂CO₂CH₂CH₂CF₂H, F₂CHCH₂CH₂CO₂CH₂CH₃, CH₃CO₂CH₂CF₃, or a combination thereof.

4. The electrolyte composition of anyone of claims 1 to 3, wherein the non-fluorinated carbonate is ethylene carbonate, propylene carbonate, ethyl methyl carbonate, dimethyl carbonate, diethyl carbonate, butylene carbonate, or a combination thereof.

5. The electrolyte composition of anyone of claims 1 to 4, wherein the composition comprises:
a) in the range of from 5 to 90 percent by weight, preferably of from 30 to 70 percent by weight, of 2,2-difluoroethyl acetate;
b) in the range of from 10 to 80 percent by weight of ethylene carbonate;
c) in the range of from 0.1 to 10 percent by weight of lithium bis(oxalato)borate;
d) lithium hexafluorophosphate;
wherein all the percentages by weight are based on the total weight of the composition.

6. The electrolyte composition of claim 5 further comprising in the range of from 0.1 to 5.0 percent by weight of e) fluoroethylene carbonate, wherein the percentage by weight is based on the total weight of the composition.

7. An electrochemical cell comprising:
(a) a housing;
(b) an anode and a cathode disposed in the housing and in ionically conductive contact with one another;
(c) the electrolyte composition of anyone of claims 1 to 6 disposed in the housing and providing an ionically conductive pathway between the anode and the cathode; and
(d) a porous separator between the anode and the cathode.

8. The electrochemical cell of claim 7 wherein the electrochemical cell is a lithium ion battery.

9. The electrochemical cell of claim 8 wherein the anode comprises an anode active material and the anode active material is lithium titanate or graphite.

10. The electrochemical cell of claim 8 or claim 9 wherein the cathode comprises a cathode active material exhibiting greater than 30 mAh/g capacity in the potential range greater than 4.6 V versus a Li/Li⁺ reference electrode.

11. The electrochemical cell of anyone of claims 8 to 10 wherein the cathode comprises a cathode active material, wherein the cathode active material is a lithium-containing manganese composite oxide represented by the formula:
LiₓNi_{y}M_{z}Mn_{2-y-z}O_{4-d},
wherein x is 0.03 to 1.0; x changes in accordance with release and uptake of lithium ions and electrons during charge and discharge; y is 0.3 to 0.6; M comprises one or more of Cr, Fe, Co, Li, Al, Ga, Nb, Mo, Ti, Zr, Mg, Zn, V, and Cu; z is 0.01 to 0.18, and d is 0 to 0.3.

12. The electrochemical cell of anyone of claims 8 to 10 wherein the cathode comprises LiₐNi_{b}M_{c}Co_{d}RₑO_{2-f}Z_{f}, wherein: R is Al, Ni, Co, Mn, Cr, Fe, Mg, Sr, V, Zr, Ti, a rare earth element, or a combination thereof; Z is F, S, P or a combination thereof; 0.8≤a≤1.2, 0.1≤b≤0.5, 0.2≤c≤0.7, 0.05≤d≤0.4, 0≤e≤0.2, wherein the sum of b+c+d+e is about 1; and 0≤f≤0.08.

13. A computer, a camera, a radio, a power tool, a telecommunication device, or a transportation device comprising the electrochemical cell of anyone of claims 7 to 12.

## Patentansprüche

1. Elektrolytzusammensetzung, umfassend:
a) mindestens eine fluorierte Verbindung, die durch R¹COOR² wiedergegeben wird;
b) ein nichtfluoriertes Carbonat;
c) 0,1 bis 10,0 Gewichtsprozent einer Lithium/BorVerbindung, bei der es sich um Lithiumbis-(oxalat)borat handelt, bezogen auf das Gesamtgewicht der Elektrolytzusammensetzung; und
d) ein Lithiumsalz, bei dem es sich um Lithiumhexafluorophosphat handelt;
wobei R¹ und R² unabhängig für eine lineare oder verzweigte Alkylgruppe stehen; die Summe der Kohlenstoffatome in R¹ und R² 2 bis 7 beträgt; mindestens zwei Wasserstoffatome in R¹ und/oder R² durch Fluoratome ersetzt sind und weder R¹ noch R² eine -CH₂F- oder -CHF-Gruppe enthält.

2. Elektrolytzusammensetzung nach Anspruch 1, wobei die Elektrolytzusammensetzung ferner bis zu 10 Gewichtsprozent Fluorethylencarbonat umfasst.

3. Elektrolytzusammensetzung nach Anspruch 1 oder Anspruch 2, wobei es sich bei der fluorierten Verbindung um CH₃CO₂CH₂CF₂H, CH₃CH₂CO₂CH₂CF₂H, F₂CHCH₂CO₂CH₃, F₂CHCH₂CO₂CH₂CH₃, CH₃CO₂CH₂CH₂CF₂H, CH₃CH₂CO₂CH₂CH₂CF₂H, F₂CHCH₂CH₂CO₂CH₂CH₃, CH₃CO₂CH₂CF₃ oder eine Kombination davon handelt.

4. Elektrolytzusammensetzung nach einem der Ansprüche 1 bis 3, wobei sich bei dem nichtfluorierten Carbonat um Ethylencarbonat, Propylencarbonat, Ethylmethylcarbonat, Dimethylcarbonat, Diethylcarbonat, Butyl Carbonat oder eine Kombination davon handelt.

5. Elektrolyt Zusammensetzung nach einem der Ansprüche 1 bis 4, wobei die Zusammensetzung Folgendes umfasst:
a) im Bereich von 5 bis 90 Gewichtsprozent, vorzugsweise von 30 bis 70 Gewichtsprozent, Essigsäure-2,2-difluorethylester;
b) im Bereich von 10 bis 80 Gewichtsprozent Ethylencarbonat;
c) im Bereich von 0,1 bis 10 Gewichtsprozent Lithiumbis(oxalat)borat;
d) Lithiumhexafluorophosphat;
wobei sich alle Gewichtsprozentanteil auf das Gesamtgewicht der Zusammensetzung beziehen.

6. Elektrolytzusammensetzung nach Anspruch 5, ferner umfassend im Bereich von 0,1 bis 5,0 Gewichtsprozent e) Fluorethylencarbonat, wobei sich der Gewichtsprozentanteil auf das Gesamtgewicht der Zusammensetzung bezieht.

7. Elektrochemische Zelle, umfassend:
(a) ein Gehäuse;
(b) eine Anode und eine Kathode, die in dem Gehäuse und in ionenleitfähigem Kontakt miteinander angeordnet sind;
(c) die Elektrolytzusammensetzung nach einem der Ansprüche 1 bis 6, die in dem Gehäuse angeordnet ist und einen ionenleitfähigen Weg zwischen der Anode unter Kathode bereitstellt; und
(d) einem porösen Separator zwischen der Anode unter Kathode.

8. elektrochemische Zelle nach Anspruch 7, wobei sich bei der elektrochemischen Zelle um eine Lithiumionenbatterie handelt.

9. Elektrochemische Zelle nach Anspruch 8, wobei die Anode ein Anodenaktivmaterial umfasst und es sich bei dem Anodenaktivmaterial um Lithiumtitanat oder Graphit handelt.

10. Elektrochemische Zelle nach Anspruch 8 oder Anspruch 9, wobei die Kathode einen Kathodenaktivmaterial umfasst, dass im Potentialbereich von mehr als 4,6 V gegen eine Li/Li⁺-Referenzelektrode eine Kapazität von mehr als 30 mAh/g aufweist.

11. Elektrochemische Zelle nach einem der Ansprüche 8 bis 10, wobei die Kathode ein Kathodenaktivmaterial umfasst, wobei sich bei dem Kathodenaktivmaterial um ein lithiumhaltiges Mangan-Mischoxid handelt, das durch die Formel:
LiₓNi_{y}M_{z}Mn_{2-y-z}O_{4-d}
wiedergegeben wird, wobei x für 0,03 bis 1,0 steht; x sich der Freisetzung und Aufnahme von Lithiumionen und Elektronen während des Ladens und Entladens entsprechend verändert; y für 0,3 bis 0,6 steht; M Cr, Fe, Co, Li, Al, Ga, Nb, Mo, Ti, Zr, Mg, Zn, V und/oder Cu umfasst; z für 0,01 bis 0,18 steht und d für 0 bis 0,3 steht.

12. Elektrochemische Zelle nach einem der Ansprüche 8 bis 10, wobei die Kathode LiₐNi_{b}M_{c}Co_{d}ReO_{2-f}Z_{f} umfasst, wobei: R für Al, Ni, Co, Mn, Cr, Fe, Mg, Sr, V, Zr, Ti, ein Seltenerdelement oder eine Kombination davon steht; Z für F, S, P oder eine Kombination davon steht; 0,8 ≤ a ≤ 1,2, 0,1 ≤ b ≤ 0,5, 0,2 ≤ c ≤ 0,7, 0,05 ≤ d ≤ 0,4, 0 ≤ e ≤ 0,2; wobei die Summe von b + c + d + e gleich 1 ist; und 0 ≤ f ≤ 0,08.

13. Computer, Kamera, Radio, Elektrowerkzeug, Telekommunikationsvorrichtung oder Transportvorrichtung, umfassend die elektrochemische Zelle nach einem der Ansprüche 7 bis 12.

## Revendications

1. Composition d'électrolyte, comprenant :
a) au moins un composé fluoré représenté par R¹COOR² ;
b) un carbonate non fluoré ;
c) de 0,1 à 10,0 pour cent en poids d'un composé de lithium/bore, qui est le bis(oxalate)borate de lithium, par rapport au poids total de la composition d'électrolyte ;
et
d) un sel de lithium, qui est l'hexafluorophosphate de lithium ;
R¹ et R² représentant indépendamment un groupe alkyle linéaire ou ramifié ; la somme des atomes de carbone dans R¹ et R² étant de 2 à 7 ; au moins deux atomes d'hydrogène dans R¹ et/ou R² étant remplacés par des atomes de fluor ; et ni R¹, ni R² ne contenant de groupe -CH₂F- ou -CHF-.

2. Composition d'électrolyte selon la revendication 1, dans laquelle la composition d'électrolyte comprend en outre jusqu'à 10 pour cent en poids de carbonate de fluoroéthylène.

3. Composition d'électrolyte selon la revendication 1 ou la revendication 2, dans laquelle le composé fluoré est CH₃CO₂CH₂CF₂H, CH₃CH₂CO₂CH₂CF₂H, F₂CHCH₂CO₂CH₃, F₂CHCH₂CO₂CH₂CH₃, CH₃CO₂CH₂CH₂CF₂H, CH₃CH₂CO₂CH₂CH₂CF₂H, F₂CHCH₂CH₂CO₂CH₂CH₃, CH₃CO₂CH₂CF₃ ou une combinaison de ceux-ci.

4. Composition d'électrolyte selon l'une quelconque des revendications 1 à 3, dans laquelle le carbonate non fluoré est le carbonate d'éthylène, le carbonate de propylène, le carbonate d'éthylméthyle, le carbonate de diméthyle, le carbonate de diéthyle, le carbonate de butylène ou une combinaison de ceux-ci.

5. Composition d'électrolyte selon l'une quelconque des revendications 1 à 4, dans laquelle la composition comprend :
a) dans la plage allant de 5 à 90 pour cent en poids, de préférence de 30 à 70 pour cent en poids, d'acétate de 2,2-difluoroéthyle ;
b) dans la plage allant de 10 à 80 pour cent en poids de carbonate d'éthylène ;
c) dans la plage allant de 0,1 à 10 pour cent en poids de bis(oxalato)borate de lithium ;
d) de l'hexafluorophosphate de lithium,
tous les pourcentages en poids étant fondés sur le poids total de la composition.

6. Composition d'électrolyte selon la revendication 5, comprenant en outre dans la plage allant de 0,1 à 5,0 pour cent en poids de e) du carbonate de fluoroéthylène, le pourcentage en poids étant fondé sur le poids total de la composition.

7. Cellule électrochimique comprenant :
(a) un boîtier ;
(b) une anode et une cathode disposées dans le boîtier et en contact ioniquement conducteur l'une avec l'autre ;
(c) la composition d'électrolyte selon l'une quelconque des revendications 1 à 6 disposée dans le boîtier et fournissant une voie ioniquement conductrice entre l'anode et la cathode ; et
(d) un séparateur poreux entre l'anode et la cathode.

8. Cellule électrochimique selon la revendication 7, dans laquelle la cellule électrochimique est une batterie lithium ion.

9. Cellule électrochimique selon la revendication 8, dans laquelle l'anode comprend un matériau actif d'anode et le matériau actif d'anode est le titanate de lithium ou le graphite.

10. Cellule électrochimique selon la revendication 8 ou la revendication 9, dans laquelle la cathode comprend un matériau actif de cathode présentant une capacité supérieure à 30 mAh/g dans la plage de potentiel supérieure à 4,6 V par rapport à une électrode de référence Li/Li⁺.

11. Cellule électrochimique selon l'une quelconque des revendications 8 à 10, dans laquelle la cathode comprend un matériau actif de cathode, le matériau actif de cathode étant un oxyde composite de manganèse contenant du lithium représenté par la formule :
LiₓNi_{y}M_{z}Mn_{2-y-z}O_{4-d}
dans laquelle x est de 0,03 à 1,0 ; x change en fonction de la libération et du captage d'ions lithium et d'électrons pendant le chargement et le déchargement ; y est de 0,3 à 0,6 ; M comprend un ou plusieurs éléments parmi Cr, Fe, Co, Li, Al, Ga, Nb, Mo, Ti, Zr, Mg, Zn, V et Cu ; z est de 0,01 à 0,18 ; et d est de 0 à 0,3.

12. Cellule électrochimique selon l'une quelconque des revendications 8 à 10, dans laquelle la cathode comprend LiₐNi_{b}M_{c}Co_{d}ReO_{2-f}Z_{f}, avec : R représentant Al, Ni, Co, Mn, Cr, Fe,, Mg, Sr, V, Zr, Ti, un élément de terres rares, ou une combinaison de ceux-ci ; Z représentant F, S, P ou une combinaison de ceux-ci ; 0,8 ≤ a ≤ 1,2, 0,1 ≤ b ≤ 0,5, 0,2 ≤ c ≤ 0, 7, 0,05 ≤ d ≤ 0,4, 0 ≤ e ≤ 0,2, la somme de b+c+d+e étant d'environ 1 ; et 0 ≤ f ≤ 0,08.

13. Ordinateur, appareil photo, radio, outil électrique, dispositif de télécommunications ou dispositif de transport comprenant la cellule électrochimique selon l'une quelconque des revendications 7 à 12.
